# EUROPEAN PATENT SPECIFICATION

(11) **EP 0 486 320 B1**
(45) Date of publication and mention of the grant of the patent: **03.07.1996**
(21) Application number: 91310568.0
(22) Date of filing: 15.11.1991
(51) Int. Cl.: F16J 9/00, F16J 9/06

(54) **Method of manufacturing a side rail of combined oil ring**
Verfahren zum Herstellen der Seitenleiste eines zusammengesetzten Ölrings
Procédé de fabrication d un rail latéral d'une bague racleur d'huile combinée

(30) Priority: 15.11.1990 JP 309452/90; 10.06.1991 JP 165012/91; 14.08.1991 JP 228817/91
(43) Date of publication of application: 20.05.1992
(73) Proprietor: TEIKOKU PISTON RING CO. LTD., Chuo-ku Tokyo (JP)
(72) Inventor: Miyazaki, Satomichi, Okaya-shi, Nagano-ken (JP); Harayama, Akira, Okaya-shi, Nagano-ken (JP); Kazama, Nobuyuki, Kamiina-gun, Nagano-ken (JP); Ishida, Masao, Okaya-shi, Nagano-ken (JP)
(74) Representative: Leale, Robin George

(56) References cited:
- FR-A- 2 069 162
- US-A- 3 364 547
- US-A- 3 650 537
- US-A- 3 806 139
- PATENT ABSTRACTS OF JAPAN vol. 9, no. 261 (M-422)(1984);& JP A 60 108551 (NIPPON PISTON RING KK) 14 June 1985.

## Description

The present invention relates to a method of manufacturing a combined oil ring principally used in an internal combustion engine, and particularly a method of manufacturing a side rail forced by a spacer expander to scrape off surplus oil on an inner wall of a cylinder.

With the recent trend toward higher load internal combustion engines,nitriding treatment has been applied to a side rail of a combined oil ring made of steel (see Japanese Patent Publication No. 61888/1982 or Japanese Patent Laid-Open No. 136771/1983 publication). This brings forth an occurrence of an abnormal abrasion phenomenon of an oil ring groove of a piston made of aluminum alloy in some engines which use leadless gasoline. The cause of the abnormal abrasion of the oil ring groove is considered to be as follows:

The hardness of a nitrided layer is too high as compared with aluminum alloy.

A combined oil ring is received in an oil ring groove of a piston, and a side rail rotates about an axis while an end portion thereof vibrates up and down.

When a relative rotation between the side rail and the oil ring groove is impaired for some cause, the wall surface of the oil ring groove sometimes becomes abnormally worn with a nitrided hard and sharp edge of the end portion of the side rail.

The following measures have been taken on the oil ring side in consideration of the above points.
(1) A chamfered portion is provided in the inner periphery of the side rail to reduce the friction by rotation within the oil ring groove (see Japanese Utility Model Laid-Open No. 34343/1988 publication).
(2) Smooth chamfers are applied to corner portions between an end surface and upper and lower surfaces (see Japanese Utility Model Laid-Open No. 178274/1989 publication).
(3) Only the end portion of the side rail is prevented from being nitrided (see Japanese Utility Model Laid-Open No. 72863/1990 publication).

However, when the nitriding treatment is applied to upper and lower surfaces, the above-described measure (1) or (2) is sometimes insufficient.

On the other hand, nitriding treatment applied to a piston ring is carried out by gas nitriding or salt-bath nitriding. According to these methods, not only outer peripheral surface but also upper and lower surfaces and inner peripheral surface become nitrided. The whole peripheral portion in section of the ring becomes nitrided as just mentioned. Therefore, when thick nitriding is applied to a thin ring, the brittleness increases with nitriding, and the breaking strength becomes materially lowered. This cannot respond to demands of the thinner ring and high abrasion resistance. Unnecessary nitrided portions should be removed by machining after nitriding treatment or anti-nitriding treatment should be applied in order that nitrided layers are not provided on upper and lower surfaces of the side rail. These involve considerable demerits in terms of technique as well as cost.

In the anti-nitriding treatment described in the above item (3), plating of nickel, copper, etc. is applied to the end portion, which is disadvantageously cumbersome in the process of manufacture.

Another method of manufacturing wear-resistant piston rings is disclosed in US-A-3364547. An outer coating is applied to the ring by spraying a thin coating of a wear resistant material selected from molybdenum, tungsten, tantalum and osmium. However, such a method involves additional costly and time-consuming process steps.

It is an object of the present invention to provide a method of manufacturing a side rail of a combined oil ring which can respond to demands of thinner ring and abrasion resistance and in addition can prevent an occurrence of abnormal abrasion of an oil ring groove.

According to the present invention there-is provided a method of manufacturing a side rail of a combined oil ring provided with a spacer expander, comprising the steps of coiling a strip of rail material, assembling said coiled material on a jig to form a coil with adjacent surfaces in contact with each other and only the outer peripheral surface being exposed, and cutting the coil into individual rails with a gap forming a pair of end surfaces, characterised in that the method further comprises the step of applying an ion nitriding treatment to the exposed outer peripheral surface of the coil to form an ion nitriding treatment layer thereon.

A preferred side rail of a combined oil ring provided with a spacer expander formed by this method comprises a nitrided layer formed on only an outer peripheral surface of said rail, said nitrided layer being an ion nitriding treatment layer, and upper and lower surfaces of said rail being base surfaces.

In the case where upper and lower surfaces or upper and lower surfaces and an inner peripheral surface are formed with soft surface treatment layers, the soft surface treatment is applied, in said steps, to the upper and lower surface or upper and lower surfaces and an inner peripheral surface prior to the step of finishing the workpiece. In the case where the inner peripheral surface is formed with a hard chrome plating layer, the hard chrome plating treatment is applied, in said steps, to the inner peripheral surface before or after the cutting step.

The aforementioned soft surface treatment is one surface treatment selected from a group of phosphate coating treatment, ferrox coating treatment, sulfide coating treatment, tin plating, soft alloy plating, copper plating, and resin fluoride coating treatment, or a composite coating treatment composed of at least two surface treatments selected from said group.

Since the side rail is provided in only its outer peripheral surface with an ion nitrided layer, the abrasion resistance with respect to the sliding contact with the cylinder is good. Since the upper and lower surfaces are base surfaces or are formed with soft surface treatment layers, the abnormal abrasion of the oil ring groove of the piston is hard to occur. When a soft surface treatment layer is formed, the good anticorrosion is obtained. When hard chrome plating is applied to the inner peripheral surface, the excellent abrasion resistance with respect to the sliding contact with the spacer expander is obtained.

By the selection of the ion nitriding treatment having a directivity of treatment as the nitriding treatment, the upper and lower surfaces and the inner surface of the side rail are not nitrided, without application of particular anti-nitriding treatment or removing work of a nitrided layer, and nitriding can be easily applied to only the outer peripheral surface. Since the nitriding can be applied to only the outer peripheral surface, in case that thick nitriding is applied to a ring which is thin in width, the product with the breaking strength not impaired can be obtained, thus enabling responding to demands of the thinner ring and abrasion resistance.

Some embodiments of the present invention will now be described by way of example and with reference to the accompanying drawings, in which:-
Fig. 1 is a longitudinal sectional view showing a combined oil ring made of steel according to the present invention which is fitted into an oil ring groove of a piston inserted into a cylinder.
Fig. 2 is a plan view of a side rail shown in Fig. 1,
Fig. 3 is a sectional view taken on line III-III of Fig. 2,
Fig. 4 is an enlarged front view of one end portion of the side rail shown in Fig. 1,
Fig. 5 is a plan view of a material for a spacer expander shown in Fig. 1,
Fig. 6 is a perspective view showing a part of the spacer expander shown in Fig. 1,
Fig. 7 is a perspective view showing a state in which a coiling material is combined with a jig,
Fig. 8 is a graph showing the distribution of hardness depthwise of an ion nitriding treatment layer according to an embodiment of the present invention,
Fig. 9 is a sectional view of another side rail corresponding to Fig. 3,
Fig. 10 is a sectional view of another side rail corresponding to Fig. 3,
Fig. 11 is a sectional view of another side rail corresponding to Fig. 3, and
Fig. 12 is a sectional view of still another side rail corresponding to Fig. 3.

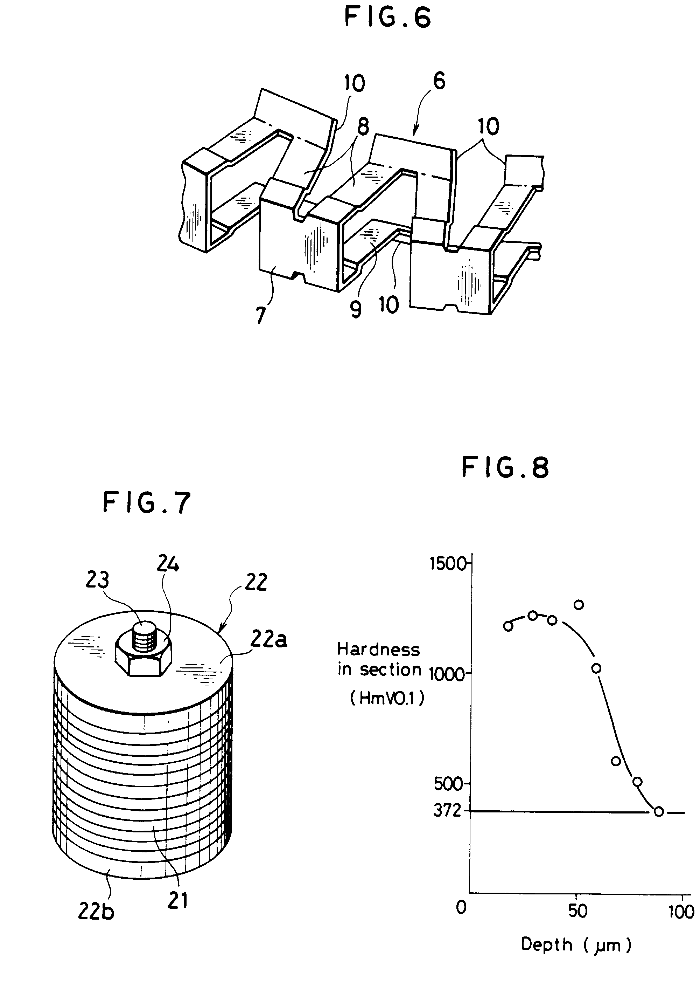

A coiling material was prepared from a martensitic stainless steel wire, and the coiling material was set to a jig (see Fig. 7). The coiling material 21 is wound around the outer periphery of a cylindrical member of the jig 22 so that the coiling material 21 is set in the proper form. Clamp disks 22a and 22b of the jig 22 are disposed on opposite ends of the coiling material 21. A nut 24 is threadedly engaged with a tapped portion of a shaft portion 23 which extends from one clamp disk 22b and extends through a center hole of the other clamp disk 22a, and the nut 24 is axially tightened and fixed. Then, the nitriding treatment was applied to the outer peripheral surface in an ion nitriding oven. The conditions of the ion nitriding treatment were, for example, as follows:
Composition of atmospheric gases:
Nitrogen : hydrogen = 7 : 3
Work temperature: 500°C
An ion nitriding treatment layer having a depth of 60 µm with a hardness of Hv 700 or more was obtained.

Fig. 8 shows the distribution of hardness depthwise of the ion nitriding treatment layer. Since a discharge occurs in only the outer peripheral surface of a work in nitriding treatment, the outer peripheral surface of the side rail is nitrided, but since the upper and lower surfaces have no clearance therebetween because they are in contact with each other and the inner peripheral surface is in contact with the cylindrical surface of the jig, no discharge occurs in these surfaces. Accordingly, it is possible to obtain a side rail in which upper arid lower surfaces and an inner peripheral surface are free from a nitrided layer.

After the ion nitriding treatment, the coiling material was removed from the jig 22, and a hard chrome plating treatment was applied to only the inner peripheral surface in a conventional method. The hard chrome plating was applied as a porous treatment to have a surface roughness of 5 to 20 µm by the inverse electrolysis treatment.

Thereafter, the workpiece was cut to form a side rail having a gap, and the upper and lower surfaces were formed with soft surface treatment layers. The soft surface treatment is a surface treatment selected from phosphate coating treatment, tin plating, soft treatment, sulfide coating treatment, tin plating, soft alloy plating, copper plating, and resin fluoride coating treatment, or a composite coating treatment composed of at least two surface treatments selected from this group.

Thereafter, the side rail was finished in a conventional method.

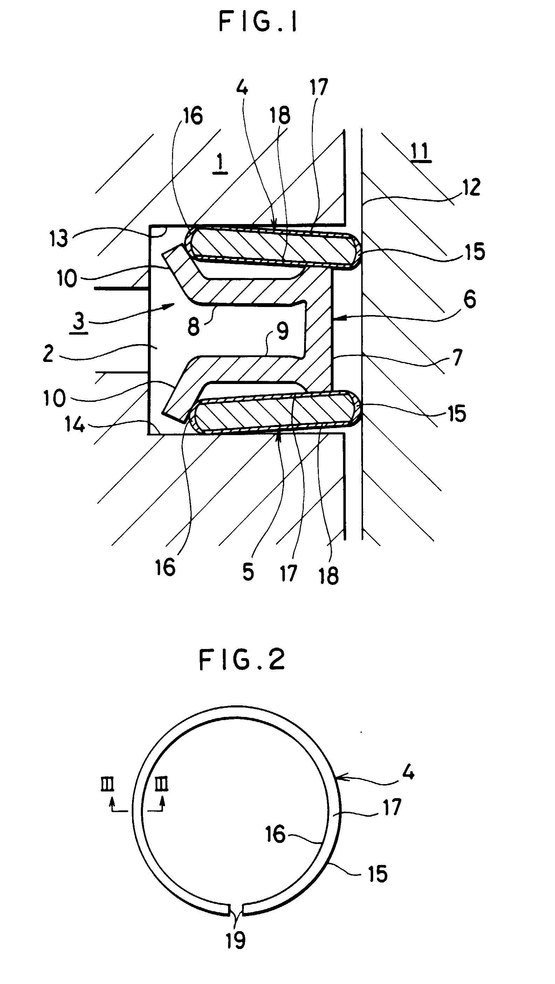

Fig. 1 shows a combined oil ring made of steel which is fitted into an oil ring groove of a piston inserted into a cylinder. The combined oil ring 3 made of steel fitted into an oil ring groove 2 of a piston 1 is composed of a pair of upper and lower steel side rails 4 and 5 which are annular with a gap, and a steel spacer expander 6 which is annular with a gap.

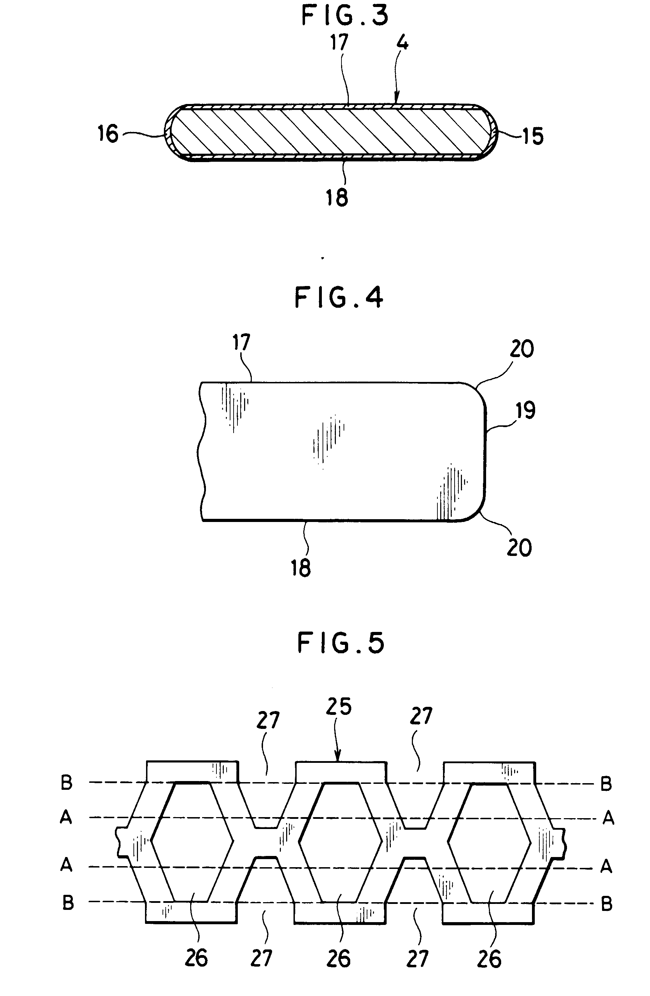

The spacer expander 6 is formed, as shown in Fig. 5, by providing a plurality of tortoise shell-like holes 26 serving as oil holes in a longitudinal direction of a thin steel strip 25, providing substantially V-shaped slits 27 on both sides of the thin steel strip 25 between the holes 26, bending both sides widthwise along the bending line A-A into a substantially U-shaped cross section so as to constitute side rail supporting portions by upper and lower pieces 8 and 9 connected by an upright piece 7 as shown in Figs. 1 and 6, further bending end portions thereof outwardly and obliquely along the bending line B-B to constitute side rail pressing portions 10, cutting it into a predetermined length, and forming it to be annular so that the side rail pressing portions 10 are arranged at the position of the inner peripheral side. The spacer expander 6 is compressed and fitted into the oil ring groove 2 to generate a radially outwardly expanding force. The pair of side rails 4 and 5 are axially spaced apart by the upper and lower pieces 8 and 9, and the outer sliding surfaces of the side rails 4 and 5 are uniformly urged by pressing portions 10 and placed in close contact with the inner wall 12 of the cylinder to scrape off oil. The ends of the inner peripheral sides of the side rails 4 and 5 are pressed by the side rail pressing portions 10 and placed in close contact with the upper and lower surfaces 13 and 14 of the oil ring groove 2 to seal the upper and lower surfaces 13 and 14.

As shown in Figs. 1, 2 and 3, the side rails 4 and 5 are provided in only the outer peripheral surface with the ion nitriding treatment layer 15, in only the inner peripheral surface with the hard chrome plating layer 16 and in the upper and lower surfaces with the soft surface treatment layers 17 and 18. It is to be noted that Figs. 2 and 3 typically show the upper side rail 4, but the lower side rail 5 is similarly shown. Accordingly, since the side rails 4 and 5 are provided in only the outer peripheral surface with the ion nitriding treatment layer 15, the good abrasion resistance with respect to the sliding contact with the inner wall 12 of the cylinder 11 is obtained. Since the hard chrome plating layer 16 is provided in only the inner peripheral surface, the excellent abrasion resistance with respect to the sliding contact with the side rail pressing portions 10 of the spacer expander 6 is obtained. The upper and lower surfaces are excellent in anticorrosion since the soft surface treatment layers 17 and 18 are formed. Since the contact surface with respect to the piston 1 made of aluminum alloy is soft, the abnormal abrasion of the oil ring groove 2 is hard to occur.

As shown in Fig. 4, corner portions between an end surface 19 and each of upper and lower surfaces of a side rail are not sharp edges but chamfering is applied to over the full length of the corner portion to form a chamfered portion 20 having the radius of curvature of 0.03 mm - 0.3 mm. Since the smooth chamfered portion 20 is formed as described, an occurrence of abnormal abrasion in upper and lower surfaces 13 and 14 of the oil ring groove 2 is reduced.

Furthermore, since the hard chrome plating layer 16 on the inner peripheral surface of the side rails 4 and 5 has been applied the porous treatment so as to have a surface roughness of 5 to 20 µm, it is possible to prevent the side rails 4 and 5 from being independently rotated.

While in the above-described embodiment, the ion nitriding treatment and the hard chrome plating treatment have been applied prior to the cutting step of the coiling material, it is to be noted that the ion nitriding treatment and the hard chrome plating treatment may be applied after the coiling material has been cut to form a side rail having a gap.

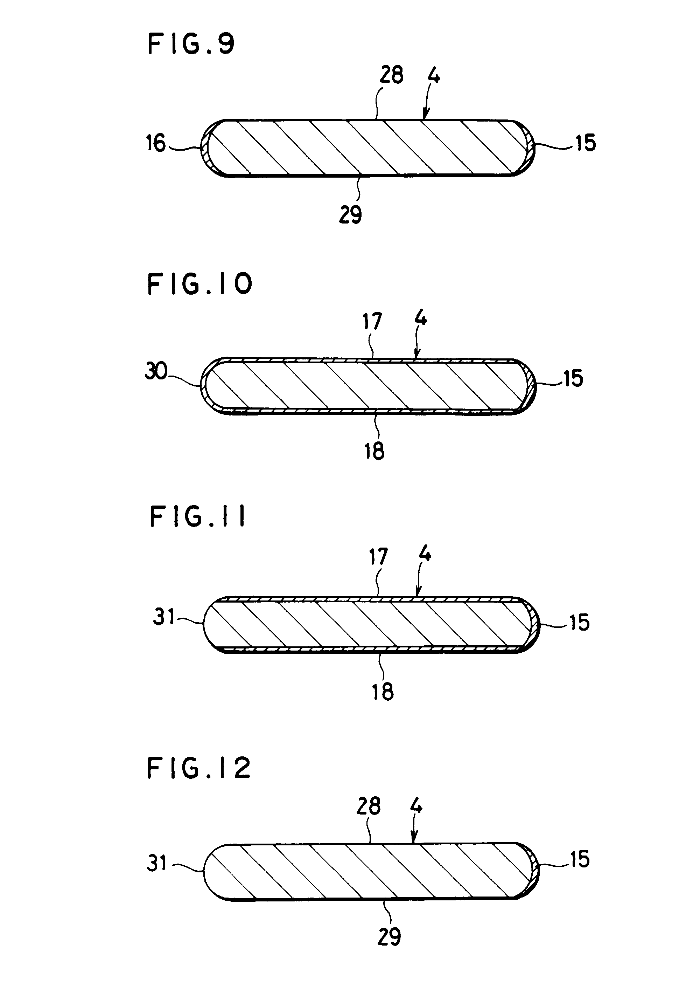

Fig. 9 shows another side rail according to an embodiment of present invention, in which an ion nitriding treatment layer 15 is formed on only the outer peripheral surface, a hard chrome plating layer 16 is formed on only the inner peripheral surface, and upper and lower surfaces are base surfaces 28 and 29.

Fig.10 shows another side rail according to an embodiment of present invention, in which an ion nitriding treatment layer 15 is formed on only the outer peripheral surface, and soft surface treatment layers 17, 18 and 30 are formed on upper and lower surfaces and an inner peripheral surface.

Fig.11 shows another side rail according to an embodiment of the present invention, in which an ion nitriding treatment layer 15 is formed on only the outer peripheral surface, soft surface treatment layers 17 and 18 are formed on upper and lower surfaces, and an inner peripheral surface is a base surface 31.

Fig.12 shows another side rail according to an embodment of the present invention, in which an ion nitriding treatment layer 15 is formed on only the outer peripheral surface, and upper and lower surfaces and an inner peripheral surface are base surfaces 28, 29 and 31.

It is to be noted that Figs. 9 to 12 typically show the upper side rail 4 but the lower side rail 5 is similarly shown.

While the invention accomplished by the present inventors has been described in detail in connection with the embodiments, the present invention is not limited to the above-described embodiments but can be naturally changed variously within the range not departing from the subject matter thereof as set out in the appendent claims.

## Claims

1. A method of manufacturing a side rail of a combined oil ring (4) provided with a spacer expander, comprising the steps of coiling a strip of rail material (21), assembling said coiled material on a jig (22) to form a coil with adjacent surfaces in contact with each other and only the outer peripheral surface being exposed, and cutting the coil into individual rails with a gap forming a pair of end surfaces, characterised in that the method further comprises the step of applying an ion nitriding treatment to the exposed outer peripheral surface of the coil to form an ion nitriding treatment layer thereon.

2. A method of manufacturing a side rail as claimed in claim 1, wherein the inner peripheral surface of said coil is in contact with an outer cylindrical surface of the jig during nitriding.

3. A method of manufacturing a side rail as claimed in claim 1 or 2, wherein said coil is axially clamped prior to nitriding.

4. A method of manufacturing a side rail as claimed in claim 1, 2 or 3, wherein said rail material comprises a martensitic stainless steel.

5. A method of manufacturing a side rail as claimed in any preceding claim, wherein said nitriding step is performed in an ion nitriding oven in an atmosphere of nitrogen and hydrogen.

6. A method of manufacturing a side rail as claimed in claim 5, wherein the ratio of nitrogen to hydrogen is approximately 7:3 and the nitriding temperature in said nitriding oven is approximately 500°C.

## Patentansprüche

1. Verfahren zur Herstellung einer Seitenschiene eines zusammengesetzten Ölrings (4), welcher mit einem Abstands-Spreizelement versehen ist, umfassend die Schritte des Wickelns eines Streifens von Schienenmaterial (21), des Zusammensetzens des gewickelten Materials auf einer Lehre (22), um eine Wicklung mit benachbarten Oberflächen zu bilden, welche in Kontakt miteinander stehen, wobei nur die Außenumfangsoberfläche freiliegt, und des Schneidens der Wicklung in einzelne Schienen mit einem Spalt, welcher ein Paar von Stirnflächen bildet,
dadurch gekennzeichnet, daß das Verfahren ferner den Schritt des Anwendens einer Ionen-Nitrierbehandlung an der freiliegenden Außenumfangsoberfläche der Wicklung umfaßt, um eine Ionen-Nitrierbehandlungsschicht darauf zu bilden.

2. Verfahren zur Herstellung einer Seitenschiene nach Anspruch 1, worin die Innenumfangsoberfläche der Wicklung während des Nitrierens in Kontakt mit einer zylindrischen Außenoberfläche der Lehre ist.

3. Verfahren zur Herstellung einer Seitenschiene nach Anspruch 1 oder 2, worin die Wicklung vor dem Nitrieren axial geklemmt wird.

4. Verfahren zur Herstellung einer Seitenschiene nach Anspruch 1, 2 oder 3, worin das Schienenmaterial martensitischen, rostfreien Stahl umfaßt.

5. Verfahren zur Herstellung einer Seitenschiene nach einem der vorhergehenden Ansprüche, worin der Nitrierschritt in einem Ionen-Nitrierofen in einer Stickstoff- und Wasserstoffatmosphäre durchgeführt wird.

6. Verfahren zur Herstellung einer Seitenschiene nach Anspruch 5, worin das Verhältnis von Stickstoff zu Wasserstoff ungefähr 7:3 ist und die Nitriertemperatur in dem Nitrierofen ungefähr 500°C ist.

## Revendications

1. Procédé de fabrication d'un rail latéral de segment racleur d'huile combiné (4) muni d'un dispositif d'expansion formant écarteur, comportant les étapes consistant à bobiner une bande de matériau de rail (21), assembler ledit matériau bobiné sur un gabarit (22) pour former une bobine, des surfaces adjacentes étant en contact les unes avec les autres, et dont seule la surface périphérique extérieure est exposée, et découper la bobine en rails individuels ayant un espace formant deux surfaces d'extrémité, caractérisé en ce que le procédé comporte en outre une étape consistant à appliquer un traitement de nitruration ionique à la surface périphérique extérieure exposée de la bobine pour former une couche de traitement de nitruration ionique sur celle-ci.

2. Procédé de fabrication d'un rail latéral selon la revendication 1, dans lequel la surface périphérique intérieure de ladite bobine est en contact avec la surface cylindrique extérieure du gabarit pendant la nitruration.

3. Procédé de fabrication d'un rail latéral selon la revendication 1 ou 2, dans lequel ladite bobine est serrée axialement avant la nitruration.

4. Procédé de fabrication d'un rail latéral selon la revendication 1, 2 ou 3, dans lequel ledit matériau pour rail est constitué d'acier inoxydable martensitique.

5. Procédé de fabrication d'un rail latéral selon l'une quelconque des revendications précédentes, dans lequel ladite étape de nitruration est mise en oeuvre dans un four de nitruration ionique dans une atmosphère constituée d'azote et d'hydrogène.

6. Procédé de fabrication d'un rail latéral selon la revendication 5, dans lequel le rapport de l'azote sur l'hydrogène est approximativement de 7/3 et la température de nitruration dans ledit four de nitruration est d'approximativement 500° C.
